# FASCICULE DE BREVET EUROPEEN

(11) **EP 3 154 832 B1**
(45) Date de publication et mention de la délivrance du brevet: **17.10.2018**
(21) Numéro de dépôt: 15738719.2
(22) Date de dépôt: 11.06.2015
(51) Int. Cl.: B60T 1/10, B60K 6/10, B62M 1/10, B61H 9/06, F16D 61/00

(54) **DISPOSITIF MECANIQUE D'AIDE A LA RELANCE D'UNE ROUE**
MECHANISCHE VORRICHTUNG ZUM UNTERSTÜTZENDEN ANTRIEB EINES RADES
MECHANICAL DEVICE FOR THE SUPPLEMENTARY DRIVING OF A WHEEL

(30) Priorité: 11.06.2014 FR 1401325
(43) Date de publication de la demande: 19.04.2017
(73) Titulaire: Civardi, Bruno, 75019 Paris (FR)
(72) Inventeur: Civardi, Bruno, 75019 Paris (FR)
(74) Mandataire: Marconnet, Sébastien
(86) Numéro de dépôt international: PCT/FR2015/051555
(87) Numéro de publication internationale: WO 2015/189526

(56) Documents cités:
- US-A1- 2007 207 889
- US-A1- 2010 148 465

## Description

L'invention porte sur un dispositif mécanique d'aide à la relance d'une roue au moyen d'un ressort de torsion à spirales à lame en plastique renforcé de fibre de carbone intégré à la roue, ressort ayant préalablement stocké l'énergie de freinage de cette même roue. Avantageusement cette aide mécanique est utilisée avec une roue de vélo par exemple.

Un tel dispositif est connu de US 2010/148465 A.

La présente invention permet d'appliquer un procédé mécanique permettant de récupérer une partie de l'énergie de freinage d'une roue, de la conserver avec moindre perte, et de la restituer au moment de la relance de cette même roue, ou de la restituer pour une aide à la rotation à n'importe quel moment. Elle sera destinée à économiser l'énergie nécessaire à la rotation d'une roue possédant des phases de freinage.

Des moteurs électriques font actuellement le même travail, mais le procédé qui est proposé est beaucoup moins polluant, puisqu'il ne nécessite pas de batterie.

L'invention propose un dispositif mécanique intégré au moyeu d'une roue permettant le stockage et le déstockage d'une énergie de freinage de la roue par l'intermédiaire d'un ressort de torsion à lame apte à se charger et se décharger en s'enroulant et se déroulant autour d'un axe commun à la roue et à un arbre support creux, caractérisé en ce que ledit arbre support porte :
- une roue libre liée mécaniquement au ressort par l'intermédiaire d'au moins une première barre de connexion,
- un ensemble de roues d'engrenages comprenant une roue d'engrenage interne, une roue d'engrenage centrale, et une roue d'engrenage externe, ladite roue d'engrenage interne étant liée mécaniquement au ressort par l'intermédiaire d'au moins une deuxième barre de connexion,
- des taquets aptes à bloquer et débloquer en rotation respectivement la roue libre, la roue d'engrenage centrale, et la roue d'engrenage externe,
et en ce qu'un arbre de commande est situé à l'intérieur dudit arbre support, ledit arbre de commande étant apte à pivoter de manière à déclencher les taquets selon des rotations suivantes:
- une rotation d'un premier angle de l'arbre de commande est apte à provoquer un blocage de la roue d'engrenage centrale permettant un chargement du ressort,
- une rotation d'un deuxième angle de l'arbre de commande est apte à provoquer un blocage de la roue libre seulement permettant de maintenir le ressort sans modifier son état d'enroulement;
- une rotation d'un troisième angle de l'arbre de commande est apte à provoquer un blocage de la roue d'engrenage externe et un déblocage de la roue libre permettant un déchargement du ressort.

Selon une réalisation, l'arbre de commande est apte à pivoter au moyen d'une force exercée sur des câbles de frein.

Selon une réalisation, la rotation d'un premier angle correspond à une rotation antihoraire de 120°, la rotation d'un deuxième angle correspond à une rotation de 0°, et la rotation d'un troisième angle correspond à une rotation horaire de 120°.

Selon une réalisation, le dispositif comprend des trains d'engrenage épicycloïdaux coopérant avec l'ensemble d'engrenages et est agencé de manière à démultiplier les forces transmises lors du chargement du ressort et d'inverser un sens d'une force de rotation transmise par une détente du ressort lors du déchargement du ressort.

Selon une réalisation, les trains d'engrenage épicycloïdaux sont maintenus par des plaques extrudées appelées cages.

Selon une réalisation, les cages sont solidaires de la roue par l'intermédiaire d'un axe de rotation des trains d'engrenages épicycloïdaux.

Selon une réalisation, le ressort est en plastique renforcé de fibres de carbone.

Selon une réalisation, le ressort présente une extrémité externe accrochée de façon fixe ou glissante à un support et une extrémité interne accrochée de façon fixe audit arbre support.

Selon une réalisation, ledit support est un anneau bloque ressort.

Selon une réalisation, le ressort comporte une partie enroulée et des extrémités internes et externes plus rigides que la partie enroulée.

Selon une réalisation, l'extrémité externe du ressort forme un angle avec l'anneau bloque ressort, tel que l'extrémité externe frotte contre une périphérie interne de l'anneau bloque ressort en cas de freinage continu alors que le ressort est chargé à son maximum. Cela permet d'obtenir un freinage complémentaire et continu.

La présente invention sera mieux comprise à l'étude d'un mode de réalisation particulier pris à titre d'exemple nullement limitatif et illustré par les dessins annexés, sur lesquels :
- La figure 1-A présente une vue de face du dispositif mécanique, sans la roue, avec ressort chargé, à une échelle de 1/3;
- La figure 1-B présente une vue de face du dispositif mécanique, sans la roue, avec ressort déchargé à l'échelle de 1/3;
- La figure 2 présente la plupart des éléments dans une vue partielle de face du dispositif, à l'échelle de 1/3;
- La figure 3-A présente une vue de face de la coque droite du carter, à l'échelle 1/4;
- La figure 3-B est une coupe A-A de la figure 3-A, à l'échelle 1/4;
- La figure 4-A présente une vue de face de la coque gauche du carter, à l'échelle 1/4;
- La figure 4-B est une coupe A-A de la figure 4-A, à l'échelle 1/4;
- La figure 5-A présente une vue de face de l'ensemble du dispositif sans la roue et le ressort, à l'échelle 1/3;
- La figure 5-B est une coupe A-A de la figure 5-A, à l'échelle 1/3;
- La figure 6-A présente une vue de face, éclatée, de l'ensemble et d'un train d'engrenages épicycloïdal, à l'échelle 1/2;
- La figure 6-B est la vue B-B de la figure 6-A, à l'échelle 1/2;
- La figure 6-C est la vue C-C de la figure 6-A, à l'échelle 1/2;
- La figure 6-D est la coupe A-A de la figure 6-B, à l'échelle 1/2;
- La figure 7-A présente une vue de face de l'arbre support, à l'échelle 1/1;
- La figure 7-B est une coupe A-A de la figure 7-A, à l'échelle 1/1;
- La figure 7-C est une coupe B-B de la figure 7-B, à l'échelle 1/1;
- La figure 7-D présente une vue de profil de l'arbre support, à l'échelle 1/1;
- La figure 8 présente une vue des taquets au droit de l'arbre de commande, sans échelle;
- La figure 9-A présente une vue de côté de l'anneau bloque ressort, à l'échelle 1/4;
- La figure 9-B est une vue de face de l'anneau bloque ressort et une coupe A-A de la figure 9-A, à l'échelle 1/4;
- La figure 9-C est une coupe B-B de la figure 9-B, à l'échelle 1/4;
- La figure 10-A est une vue de profil des engrenages actifs lors de la charge du ressort, sans échelle. Il n'est représenté qu'un seul engrenage satellitaire;
- La figure 10-B est une vue de profil des engrenages actifs lors de la décharge du ressort, sans échelle. Il n'est représenté qu'un seul train d'engrenages épicycloïdal;
- La figure 10-C est une vue de profil de l'arbre de commande, à l'échelle1/1;
- La figure 11-A est une vue du répartiteur de freinage, sans échelle;
- La figure 11-B est une vue du répartiteur lorsque la tension est assez forte pour activer le frein par ressort, sans échelle;
   16 repère le câble de freinage par ressort avant le répartiteur
   17 repère le câble de freins principal actionné manuellement
   19 repère le câble de freins à mâchoires
   21 repère le câble de freinage par ressort après le répartiteur
- Les figures 12-A et 12-B sont respectivement des vues en perspective de la roue d'engrenage interne et de la roue libre;
- Les figures 13-A et 13-B sont des vues en perspectives des barres de connexion et du dispositif mécanique selon l'invention;
- La figure 14 est une vue en perspective d'une roue équipée d'un dispositif mécanique selon l'invention;
- La figure 15 représente un vélo équipé sur sa roue arrière d'un dispositif mécanique selon l'invention.

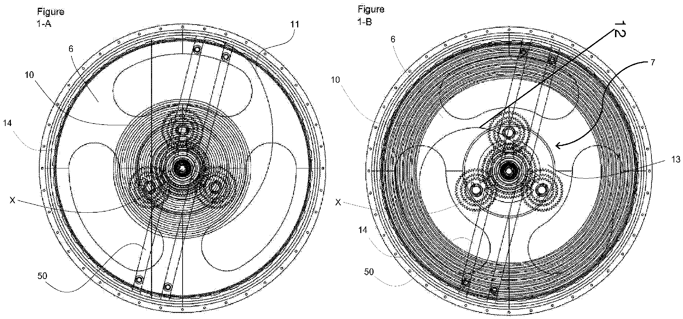

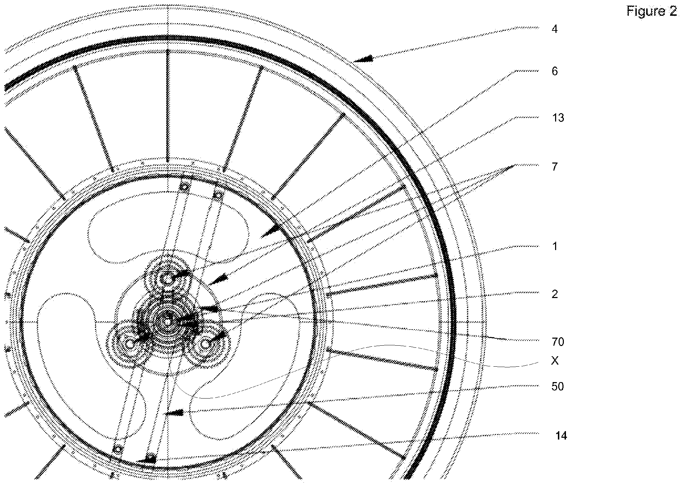

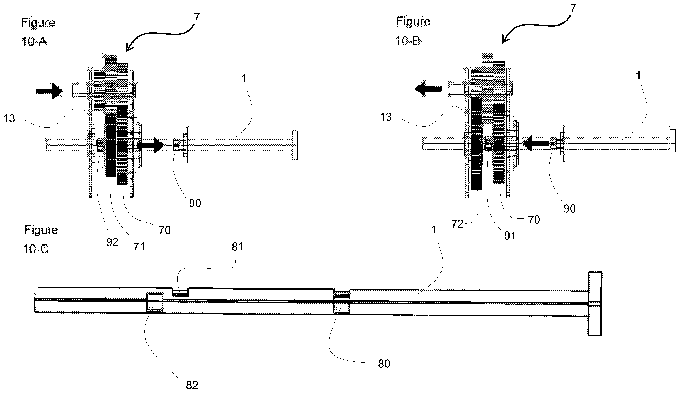

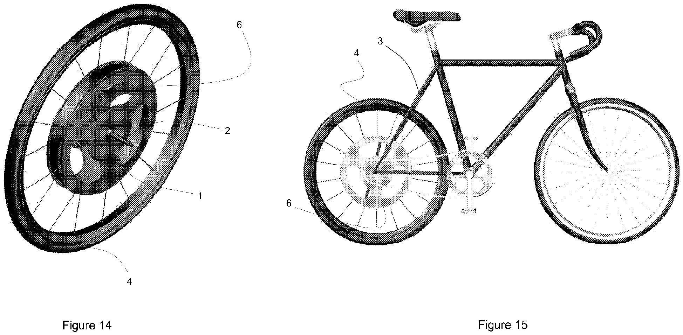

Une énergie de freinage est récupérée et conservée grâce à un ressort de torsion 10 à spirales à lame, jointive ou non, inclus dans un carter 6 solidaire d'une roue 4. Le ressort 10 en état chargé est montré en figure 1-A, et l'état déchargé est montré en figure 1-B. Lors du freinage, la roue 4 entraîne le ressort 10 et le tord en l'enroulant autour d'un axe X de la roue 4, emmagasinant cette énergie dite de freinage. Cette torsion peut être démultipliée en ajoutant un train d'engrenages épicycloïdal 7 adéquat montré plus en détail en figure 10-A. Puis le ressort 10 est déconnecté de la roue 4 pour emmagasiner à long terme cette énergie. Ensuite, à tout moment, ce ressort 10 peut être reconnecté à la roue 4 pour la relancer ou lui donner une aide à la rotation, montré plus en détail en figure 10-B. Ce dispositif mécanique (figure 2 et 14) peut se situer dans la roue 4 ou à côté de la roue 4, ce dispositif mécanique doit être raccordé au pignon de la roue 4.

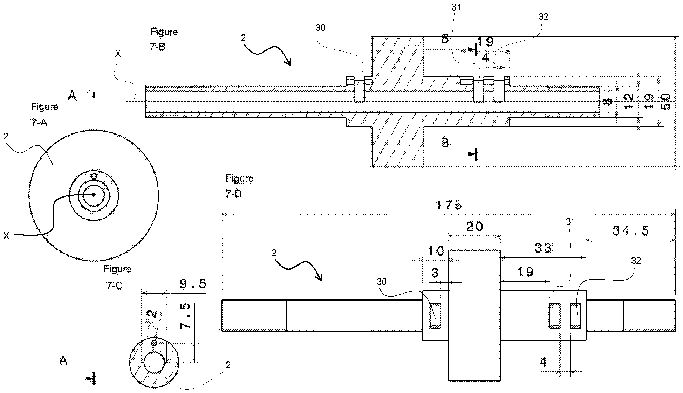

On décrit ci-après un des modes de réalisation de cette invention :
Un arbre 1, situé dans un axe X d'un arbre support 2 (figure 7-B) et fixé au cadre de la roue 3, commande le dispositif mécanique, il est appelé arbre de commande 1.

Il permet :
- soit de désolidariser le dispositif mécanique de la roue 4, sauf les trains d'engrenages épicycloïdaux 7, le dispositif mécanique restant solidaire de l'arbre support 2, lors de la phase de non utilisation du dispositif ;
- soit de connecter un bout externe 11 du ressort 10 à la roue 4, via un système de démultiplication des forces fonctionnant à l'aide d'un train d'engrenages épicycloïdal planétaire 7 pour enrouler le ressort 10 lors d'une phase de freinage, et stocker de l'énergie (figure 10-A);
- soit de connecter le bout externe 11 du ressort 10 à la roue 4, via un système de train d'engrenages épicycloïdal 7 inversant la rotation, pour dérouler le ressort 10 lors de la phase de relance de la roue 4, et restituer l'énergie dans le sens de rotation de la roue 4 (figure 10-B).

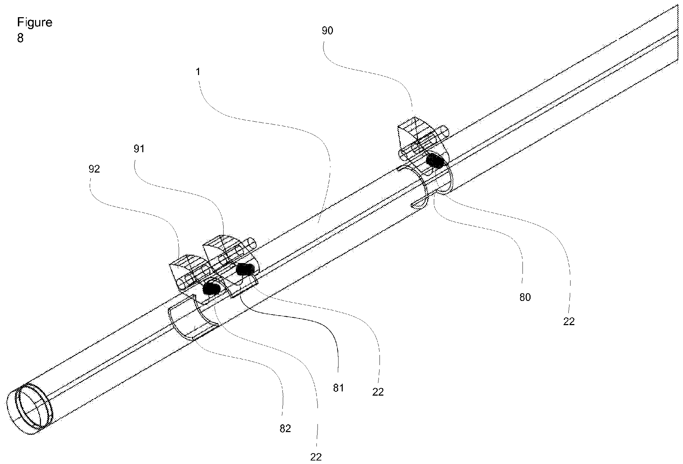

L'arbre de commande 1 visible en figure 8 et 10-C est équipé de réservations 80, 81, 82 pour permettre, lors de sa rotation, de relever ou d'abaisser des taquets 90, 91, 92. Trois taquets 90, 91, 92 visibles en figure 8 agissent en bloquant, ou en libérant en rotation certaines pièces, en fonction de la phase d'évolution.

On décrit ci-après les principaux éléments constituant le dispositif mécanique :

### Ressort de torsion 10:

C'est un ressort 10 de torsion à lame jointive ou non, immobilisé dans un tube, ici le tube correspond au carter 6. Avant tout stockage d'énergie, le ressort 10 est déroulé, quasiment entièrement, autour de l'axe de rotation X le supportant soit l'axe de l'arbre support 2 et contre un anneau 14, comme montré en figure 1-B.

Une fois l'énergie de freinage stockée dans le ressort 10, celui-ci se retrouve enroulé contre l'axe X, comme illustré par la figure 1-A.

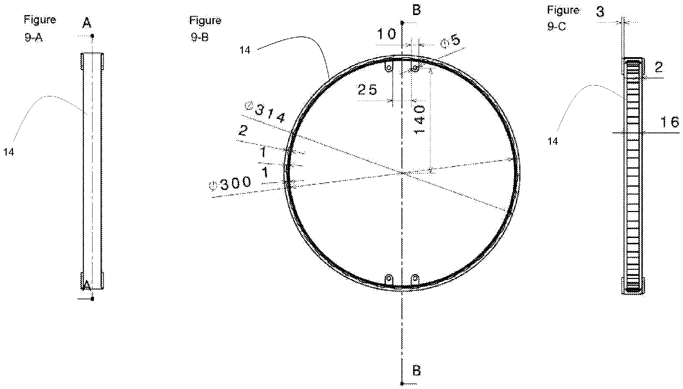

L'anneau 14, montré en détail sur la figure 9, est fixé au bout des barres de connexion 50, 51 il est appelé anneau bloque ressort 14. L'extrémité du ressort 10 la plus externe 11 est accrochée de façon fixe à ce support 14 en condition normale et de façon glissante en fin de chargement du ressort 10. L'extrémité la plus interne 12 du ressort est accrochée de façon fixe à l'arbre support 2.

Ainsi, lorsque le ressort 10 est complétement chargé, son extrémité externe 11 forme un angle avec l'anneau bloque ressort 14 de manière à ce que lorsque le freinage continue, l'extrémité externe 11 va venir frotter la périphérie interne de l'anneau bloque ressort 14, permettant alors un freinage complémentaire et continu.

La géométrie de ce ressort 10 est adaptée pour que son enroulement et son déroulement nécessitent une force constante, pour une rotation de ressort constante. Pour ce faire, les extrémités du ressort 11, 12 sont moins larges et plus épaisses que la partie enroulée pour pouvoir être plus rigides, et pallier au fait qu'en fin et en début de déroulement et d'enroulement toutes les spires ne sont pas encore complétement actives.

### Carter 6 et roue 4 :

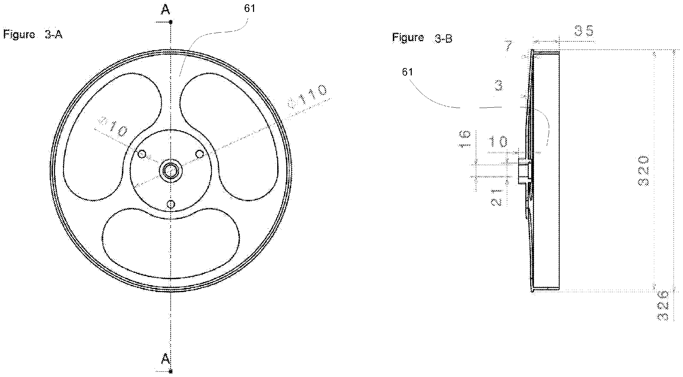

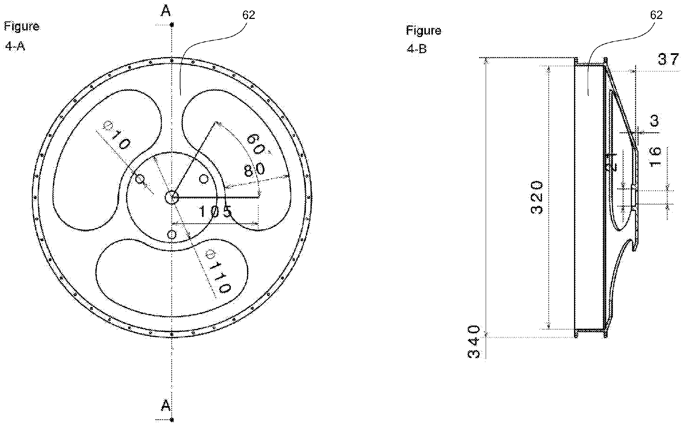

Le carter 6 est composé de deux coques, droite 61 (cf. figure 3) et gauche 62 (cf. figure 4), qui se solidarisent pour contenir le ressort 10, et presque l'ensemble du dispositif mécanique. Ce carter 6 est solidaire de la roue 4. Il joue le rôle de moyeu de la roue 4, comme montré en figure 2, 14 et 15.

### Arbre de commande 1:

L'arbre de commande 1, visible en figure 10-C, se présente sous la forme d'une barre centrale 1 située dans l'axe X commun à la roue 4, à l'arbre support 2 et au dispositif mécanique. L'arbre de commande 1 est rainuré, et lorsqu'il pivote et qu'il place ses réservations 80, 81, 82 sous des taquets 90, 91, 92, comme montré en figure 8, il les débloque, alors ces taquets 90, 91 92 se relèvent et bloquent les éléments en rotation présents au-dessus de l'arbre support 2:
- soit une rotation de - 120°, provoque un blocage de la roue d'engrenage centrale 71 à dentures droites (figure 10-A) pour chargement du ressort 10 (taquet 91 central), et un déblocage du taquet 90 de la roue libre 100 qui est alors non bloquant; dans cet état le taquet 90 de la roue libre 100 n'empêchera pas la rotation ;
- soit une rotation de 0°, provoque un blocage de la roue libre 100 toute seule pour maintenir le ressort 10 en l'état d'enroulement, avec le taquet 90 de la roue libre 100 ayant un fonctionnement bloquant en antiretour;
- soit une rotation de 120°, provoque un blocage de la roue d'engrenage la plus externe 72 à dentures droites (figure 10-B), pour décharger le ressort 10 (taquet 92 le plus externe de la roue d'engrenage externe 72) et un déblocage de la roue libre 100 (taquet 90 de la roue libre 100).

L'arbre de commande 1 est mis en rotation par la force exercée sur des câbles de frein 16, 17, via un répartiteur 15.

Les réservations 80, 81, 82 ensemble forment un angle de plus de 360° (les taquets 90 et 92 étant relevés simultanément pendant la phase de restitution de l'énergie) afin de s'étendre sur toute la circonférence de l'arbre de commande 1.

### Anneau bloque ressort 14 (figure 2 et 9) :

C'est un anneau 14 maintenu en huit points par les barres de connexion 50, 51 il permet de contenir le ressort 10 quand celui-ci est déroulé, et chargé.

### Arbre support 2 (figure 7) :

L'arbre support 2 se présente sous la forme d'une barre 2 contenant les taquets 90, 91, 92 dans leurs emplacements respectifs 30, 31, 32 et supportant les différents éléments du dispositif mécanique : roues d'engrenage 70, 71, 72, la roue libre 100, et le carter 6. Il est connecté de façon fixe, au cadre de la roue 3.

### Trains d'engrenages épicycloïdaux 7 et Cages 13 :

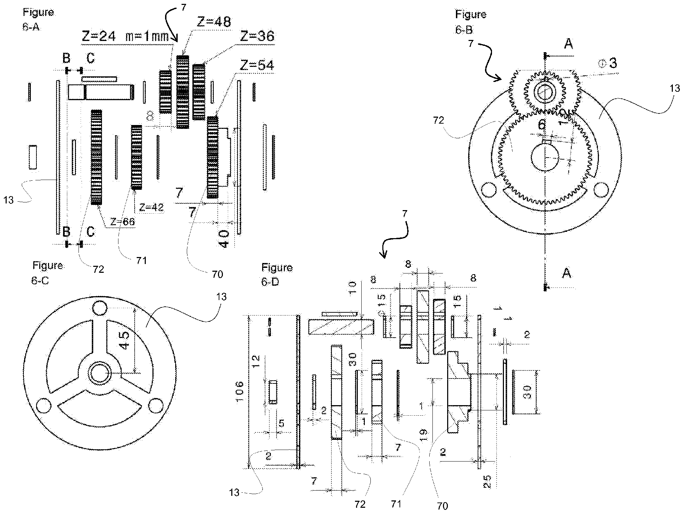

Le train d'engrenages épicycloïdal planétaire 7 visibles en figure 2 et 6-A sert à démultiplier la force nécessaire à l'enroulement du ressort 10, lors de sa charge. Et à inverser le sens d'une force de rotation transmise par une détente du ressort 10 lors de sa décharge. Les engrenages 7 sont maintenus dans leurs axes de rotation par des plaques extrudées appelées cages 13 montrées en figure 6-C. Ces cages 13 sont solidaires de la roue 4, car solidaires du carter 6 par l'intermédiaire de l'axe de rotation des engrenages épicycloïdaux 7.

En condition de freinage, ces trains d'engrenages 7 sont forcés de pivoter sur eux-mêmes et autour de la roue d'engrenage centrale 71 bloquée par son taquet 91, permettant alors de démultiplier la force nécessaire à l'enroulement du ressort 10, via la roue d'engrenage interne 70, lors de sa charge.

Lors de la relance de la roue 4, ces trains d'engrenages 7 sont forcés de pivoter sur eux-mêmes en sens inverse et autour de la roue d'engrenage externe 72 bloquée par son taquet 92, permettant alors le déroulement du ressort 10, via la roue d'engrenage interne 70, lors de sa décharge.

### Freins à mâchoires 20 :

Des freins à mâchoires 20 sont utilisés sur la roue 4 pour permettre un freinage adéquat à tout moment.

### Taquets (figure 8 et 10-C) :

Les taquets 90, 91, 92 sont situés dans l'arbre support 2 et peuvent se relever lorsque la réservation 80, 81, 82 adéquate présente sur l'arbre de commande 1 est placée en dessous, un ressort 22 l'y aidant ou une lame. Les taquets 90, 91, 92 bloquent en rotation les éléments situés au-dessus.

Lorsque l'arbre de commande 1 pivote et place les réservations 80, 81, 82 au droit des taquets 90, 91, 92, ceux-ci se relèvent.

Bien entendu, le nombre de taquets 90, 91, 92 n'est pas limitatif et pourra être adapté à toute application.

### Roues d'engrenages 70, 71, 72 (figure 6) :

Au nombre de trois, ces roues d'engrenages 70, 71, 72 situées sur l'axe X de l'arbre support 2 permettent de charger (figure 10-A) ou décharger (figure 10-B) le ressort 10. La roue d'engrenage interne 70 la plus proche du ressort 10 est solidaire des deux barres de connexion 50 connexes, donc du bout le plus externe 11 du ressort 10. Les deux autres roues d'engrenages 71, 72 sont en rotation libre si elles ne sont pas bloquées par leurs taquets 91, 92 respectifs.

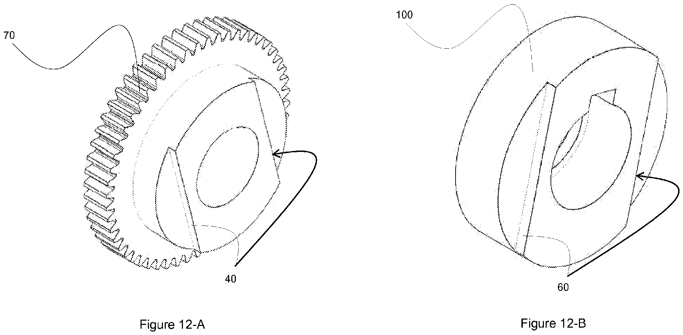

Afin de se solidariser avec les barres de connexion 50, la roue d'engrenage interne 70 comprend un méplat 40. (Figure 12-A)

Bien entendu, le nombre de roues d'engrenages 70, 71, 72 n'est pas limitatif et pourra être adapté à toute application.

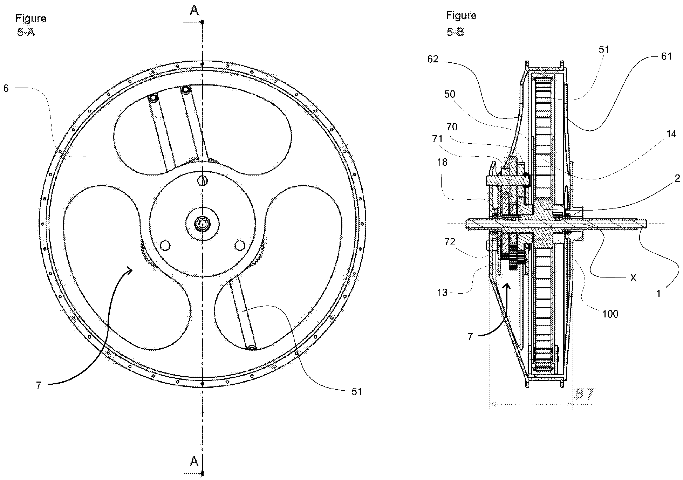

### Roue libre 100 (Figure 5-B):

La roue libre 100 est une roue qui se trouve de l'autre côté du ressort 10 par rapport aux engrenages 7, 70, 71, 72. Elle est solidaire des barres de connexions 51 connexes et donc de l'extrémité externe 11 du ressort 10 par l'intermédiaire de l'anneau bloque ressort 14. Cet élément 100, est bloqué contre l'arbre support 2 par un taquet 90. Lorsque la roue libre 100 est débloquée par le taquet 90 adéquat, elle permet de décharger le ressort 10. Lors de la charge, ce taquet 90 est rabattu automatiquement par la rotation du ressort 10.

Afin de se solidariser avec les barres de connexion 51, la roue libre 100 comprend un méplat 60. (Figure 12-B)

### Barre de connexion 50, 51 (figure 2, 5-B, 13-A et 13-B) :

Au nombre de quatre, ces barres de connexion 50, 51 permettent de connecter le bout le plus externe 11 du ressort 10 au reste du dispositif mécanique. Les deux barres de connexion 51 les plus externes, de l'autre côté par rapport aux engrenages 7, 70, 71, 72, permettent de solidariser ou désolidariser le bout le plus externe 11 du ressort du cadre de la roue 3, via la roue libre 100, et via l'arbre support 2. Les deux barres de connexion 50 entre les engrenages 7, 70, 71, 72 et le ressort 10 servent à transmettre les forces en chargement et en déchargement, via les engrenages 7, 70, 71, 72 entre la roue 4 et le ressort 10.

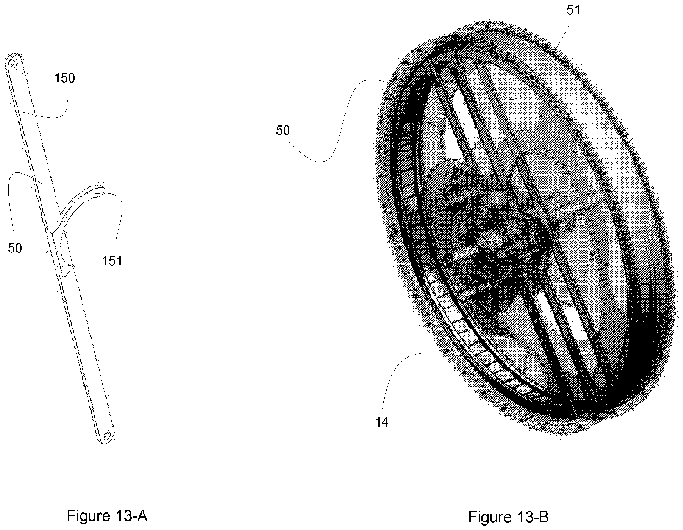

Les barres de connexion 50, 51 comprennent une première portion longitudinale 150 et une deuxième portion transversale 151 coopérant avec un méplat 40, 60 de la roue d'engrenage interne 70 ou de la roue libre 100 (Figure 13-A). Bien entendu, le nombre de barres de connexion 50, 51 n'est pas limitatif et pourra être adapté à toute application.

### Cadre fixe de la roue 3 :

Le cadre de la roue 3 est un élément fixe extérieur à la roue 4 et non entraîné par la rotation de la roue 4. La roue 4 y est raccordée par l'arbre support 2.

### Répartiteur 15 :

Le répartiteur 15 permet de répartir les forces de freinage pour permettre d'avoir un freinage de la roue 4 uniforme. Lorsque la force de freinage devient équivalente à la force nécessaire à l'enroulement du ressort 10, le freinage par ressort s'active, et les freins mâchoires 20 se désactivent pour reprendre aussitôt.

On décrit ci-après différentes phases d'évolution normale de cette invention :

### Phase 1

Le dispositif mécanique est en attente d'un freinage suffisant pour se charger automatiquement (figure 1-B). Il se peut qu'il soit déjà chargé partiellement, ou complètement. Il est alors aussi prêt à restituer l'énergie emmagasinée.

Le dispositif peut rester indéfiniment dans cette position et la roue 4 peut tourner sans encombre car le ressort 10 est bloqué en rotation et déconnecté de la roue 4, connecté à l'arbre support 2 solidaire du cadre de la roue 3.

L'arbre de commande 1 (figure 10-C) est en position 0°. Grâce aux réservations 80, 81, 82 qu'il possède, le taquet 90 de la roue libre 100 est relevé et bloque la roue libre 100 en rotation, et donc le bout externe du ressort 11. L'autre bout interne du ressort 12 restant toujours fixé à l'arbre support 2 fixe, le ressort 10 est bloqué dans son état d'enroulement et ne peut pas se décharger.

### Phase 2

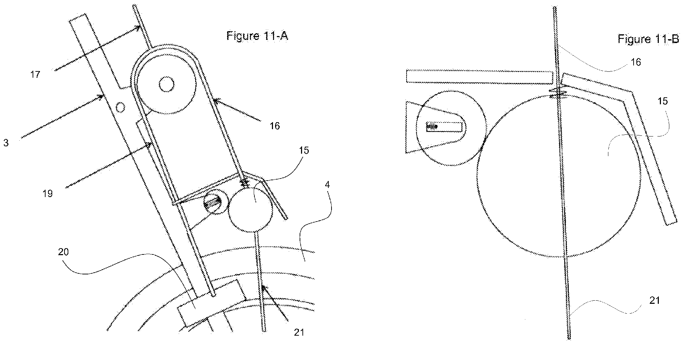

Un freinage débute. Le câble de frein 16, 17, visibles en figure 11-A et 11-B, renvoie sa force vers les freins mâchoires 20, jusqu'à arriver à un seuil de tension qui permet au répartiteur 15, d'entraîner en rotation l'arbre de commande 1 (figure 10-C) de 120° en sens antihoraire. Répartiteur 15 qui libère aussi les freins mâchoires 20 d'une force de frottement équivalente à la force de torsion démultipliée du ressort 10. Ceci pour conserver un freinage constant. Grâce aux réservations 80, 81, 82 que l'arbre de commande 1 possède, il libère le taquet 91 central, bloquant en rotation la roue d'engrenage centrale 71 (figure 10-A). Les trains d'engrenages épicycloïdaux 7, transmettent alors la force de rotation donnée par les coques 61, 62 (figure 3 et 4) à la roue d'engrenage interne 70, car en appui sur la roue d'engrenage centrale 71. Les trains d'engrenages épicycloïdaux 7 étant solidaires des coques 61, 62, les coques 61, 62 transmettent leur énergie de rotation à la roue d'engrenage interne 70 la plus proche du ressort 10. Cette roue d'engrenage interne 70 proche du ressort 10 entraîne en rotation les barres de connexion 50 ainsi que l'anneau bloque ressort 14 auquel est fixée l'extrémité du ressort le plus externe 11, enroulant ainsi le ressort 10 autour de l'axe X, emmagasinant l'énergie de freinage (Figure 1-A). Le freinage par frein à mâchoire 20 reprend instantanément si besoin est, grâce au répartiteur 15. La vitesse de rotation du ressort 10 est démultipliée par les dimensions des engrenages épicycloïdaux 7 en jeux. Lors de l'arrêt du freinage, le répartiteur 15 arbitre inversement les deux types de forces de freinage.

### Phase 3

Lorsqu'il y a besoin d'une aide à la rotation de la roue 4 ou d'une aide au redémarrage de la roue 4, l'arbre de commande 1 (figure 10-C) doit être tourné de 120° dans le sens horaire, par son extrémité sortant de l'arbre support 2. Grâce aux réservations 80, 81, 82 qu'il possède, il replie le taquet 90 retenant la roue libre 100, la libérant, raccordée aux barres de connexion 51 et au bout externe du ressort 11, permettant au ressort 10 de restituer l'énergie emmagasinée en faisant pivoter les barres de connexion 50 de l'autre côté du ressort 10 sous la force du ressort 10. Ces barres de connexions 50 entraînent la roue d'engrenage interne 70 connexe. L'arbre de commande 1 a aussi libéré le taquet 92 retenant la roue d'engrenage 72 la plus externe, ce qui permet de transmettre la force de rotation aux engrenages planétaires 7, en inversant le sens de rotation (figure 10-B). Et donc l'énergie se transmet des engrenages planétaires 7 jusqu'à la roue 4 via les coques 61, 62.

Un avantage supplémentaire d'une telle invention est qu'il n'est pas nécessaire de charger complètement le ressort 10 afin qu'il restitue l'énergie de freinage emmagasinée.

La présente invention n'est nullement limitée aux modes de réalisation décrits et représentés mais l'homme du métier saura y apporter toute variante conforme à l'objet des revendications annexées.

## Revendications

1. Dispositif mécanique intégré au moyeu d'une roue (4) permettant le stockage et le déstockage d'une énergie de freinage de la roue (4) par l'intermédiaire d'un ressort de torsion à lame (10) apte à se charger et se décharger en s'enroulant et se déroulant autour d'un axe (X) commun à la roue (4) et à un arbre support (2) creux, un arbre de commande (1) étant situé à l'intérieur dudit arbre support (2), **caractérisé en ce que** ledit arbre support (2) porte :
- une roue libre (100) liée mécaniquement au ressort (10) par l'intermédiaire d'au moins une première barre de connexion (51),
- un ensemble de roues d'engrenages (70, 71, 72) comprenant une roue d'engrenage interne (70), une roue d'engrenage centrale (71), et une roue d'engrenage externe (72), ladite roue d'engrenage interne (70) étant liée mécaniquement au ressort (10) par l'intermédiaire d'au moins une deuxième barre de connexion (50),
- des taquets (90, 91, 92) aptes à bloquer et débloquer en rotation respectivement la roue libre (100), la roue d'engrenage centrale (71), et la roue d'engrenage externe (72),
et **en ce que** l'arbre de commande (1) est apte à pivoter de manière à déclencher les taquets (90, 91, 92) selon des rotations suivantes:
- une rotation d'un premier angle de l'arbre de commande (1) est apte à provoquer un blocage de la roue d'engrenage centrale (71) permettant un chargement du ressort (10),
- une rotation d'un deuxième angle de l'arbre de commande (1) est apte à provoquer un blocage de la roue libre (100) seulement permettant de maintenir le ressort (10) sans modifier son état d'enroulement;
- une rotation d'un troisième angle de l'arbre de commande (1) est apte à provoquer un blocage de la roue d'engrenage externe (72) et un déblocage de la roue libre (100) permettant un déchargement du ressort (10).

2. Dispositif mécanique selon la revendication 1, **caractérisé en ce que** l'arbre de commande (1) est apte à pivoter au moyen d'une force exercée sur des câbles de frein (16, 17).

3. Dispositif mécanique selon la revendication 1 ou 2, **caractérisé en ce que** la rotation d'un premier angle correspond à une rotation antihoraire de 120°, la rotation d'un deuxième angle correspond à une rotation de 0°, et la rotation d'un troisième angle correspond à une rotation horaire de 120°.

4. Dispositif mécanique selon l'une quelconque des revendications 1 à 3, **caractérisé en ce qu'**il comprend des trains d'engrenage épicycloïdaux (7) coopérant avec l'ensemble d'engrenages (70, 71, 72) et est agencé de manière à démultiplier les forces transmises lors du chargement du ressort (10) et d'inverser un sens d'une force transmise par une détente du ressort (10) lors du déchargement du ressort (10).

5. Dispositif mécanique selon la revendication 4, **caractérisé en ce que** les trains d'engrenage épicycloïdaux (7) sont maintenus par des plaques extrudées appelées cages (13).

6. Dispositif mécanique selon la revendication 5, **caractérisé en ce que** les cages (13) sont solidaires de la roue (4) par l'intermédiaire d'un axe de rotation des trains d'engrenages épicycloïdaux (7).

7. Dispositif mécanique selon l'une quelconque des revendications 1 à 6, **caractérisé en ce que** le ressort (10) est en plastique renforcé de fibres de carbone.

8. Dispositif mécanique selon l'une quelconque des revendications 1 à 7, **caractérisé en ce que** le ressort (10) présente une extrémité externe (11) accrochée de façon fixe ou glissante à un support (14) et une extrémité interne (12) accrochée de façon fixe audit arbre support (2).

9. Dispositif mécanique selon la revendication 8, **caractérisé en ce que** ledit support (14) est un anneau bloque ressort.

10. Dispositif mécanique selon la revendication 8 ou 9, **caractérisé en ce que** le ressort (10) comporte une partie enroulée et des extrémités internes et externes (11, 12) plus rigides que la partie enroulée.

11. Dispositif mécanique selon revendication 9 ou 10, **caractérisé en ce que** l'extrémité externe (11) du ressort (10) forme un angle avec l'anneau bloque ressort (14), tel que l'extrémité externe (11) frotte contre une périphérie interne de l'anneau bloque ressort (14) en cas de freinage continu alors que le ressort (10) est chargé à son maximum.

## Patentansprüche

1. Mechanische Vorrichtung, eingebaut in der Nabe eines Rades (4), zur Speicherung und Rückgewinnung einer Bremsenergie für das Rad (4) über eine Torsionsblattfeder (10), die durch Auf- und Abwickeln um eine Achse (X) gemeinsam mit dem Rad (4) und einer hohlen Trägerwelle (2) be- und entladen werden kann,
wobei eine Steuerwelle (1) innerhalb der Trägerwelle (2) angeordnet ist,
**dadurch gekennzeichnet, dass** der Trägerwelle (2) trägt:
- ein freies Rad (100), das über mindestens eine erste Verbindungstange (51) mit der Feder (10) mechanisch verbunden ist,
- einen Zahnradsatz (70, 71, 72) mit einem Innenzahnrad (70), einem Zentralzahnrad (71) und einem Außenzahnrad (72), wobei das Innenzahnrad (70) über wenigstens eine zweite Verbindungsstange (50) mit dem Feder (10) mechanisch verbunden ist,
- Anschläge (90, 91, 92), die das freie rad (100), das Zentralzahnrad (71) und das Außenzahnrad (72) jeweils verriegeln und entriegeln können,
und dass die Steuerwelle (1) schwenkbar ist, um die Anschläge (90, 91, 92) für die folgenden Drehungen auszulösen:
- eine Drehung der Steuerwelle (1) um einen ersten Winkel kann eine Verriegelung des zentralen Zahnrads (71) zum Belasten der Feder (10) bewirken,
- eine Drehung der Steuerwelle (1) um einen zweiten Winkel kann eine Blockierung des freien Rads (100) bewirken, um nur die Feder (10) zu halten, ohne deren Wickelzustand zu ändern;
- eine Drehung der Steuerwelle (1) um einen dritten Winkel kann eine Verriegelung des Außenzahnrads (72) und eine Entriegelung des freien Rads (100) zum Entlasten der Feder (10) bewirken.

2. Mechanische Vorrichtung nach Anspruch 1, **dadurch gekennzeichnet, dass** die Steuerwelle (1) mit Hilfe einer an Bremsseile (16, 17) ausgeübten Kraft verschwenkbar ist.

3. Mechanische Vorrichtung nach Anspruch 1 oder 2, **dadurch gekennzeichnet, dass** die Drehung um einen ersten Winkel einer 120°-Drehung entgegen dem Uhrzeigersinn, die Drehung um einen zweiten Winkel einer 0°-Drehung und die Drehung um einen dritten Winkel einer 120°-Drehung im Uhrzeigersinn entspricht.

4. Mechanische Vorrichtung nach einem der Ansprüche 1 bis 3, **dadurch gekennzeichnet, dass** sie Planetengetriebezüge (7) umfasst, die mit der Zahnradanordnung (70, 71, 72) zusammenwirken, und angeordnet sind, um die beim Beladen der Feder (10) übertragenen Kräfte zu erhöhen, und um eine Richtung einer durch eine Expansion der Feder (10) beim Entladen der Feder (10) übertragenen Kraft umzukehren.

5. Mechanische Vorrichtung nach Anspruch 4, **dadurch gekennzeichnet, dass** die Planetengetriebezüge (7) durch extrudierte Platten, sogenannte Käfige (13), gehalten sind.

6. Mechanische Vorrichtung nach Anspruch 5, **dadurch gekennzeichnet, dass** die Käfige (13) über eine Drehachse der Planetengetriebezüge (7) mit dem Rad (4) fest verbunden sind.

7. Mechanische Vorrichtung nach einem der Ansprüche 1 bis 6, **dadurch gekennzeichnet, dass** die Feder (10) aus mit Kohlenstofffasern verstärktem Kunststoff besteht.

8. Mechanische Vorrichtung nach einem der Ansprüche 1 bis 7, **dadurch gekennzeichnet, dass** die Feder (10) ein äußeres, an einem Träger (14) fest oder verschiebbar befestigtes Ende (11) und ein inneres, an der Trägerwelle (2) befestigtes Ende (12) aufweist.

9. Mechanische Vorrichtung nach Anspruch 8, **dadurch gekennzeichnet, dass** der Träger (14) ein Federverriegelungsring ist.

10. Mechanische Vorrichtung nach Anspruch 8 oder 9, **dadurch gekennzeichnet, dass** die Feder (10) einen gewickelten Abschnitt und innere und äußere Enden (11, 12) umfasst, die steifer als der gewickelte Abschnitt sind.

11. Mechanische Vorrichtung nach Anspruch 9 oder 10, **dadurch gekennzeichnet, dass** das äußere Ende (11) der Feder (10) mit dem Federsicherungsring (14) einen solchen Winkel bildet, dass das äußere Ende (11) an einem Innenumfang des Federsicherungsringes (14) bei dauerndem Bremsen unter maximaler Belastung der Feder (10) reibt.

## Claims

1. A mechanical device integrated in the hub of a wheel (4) for storing and retrieving a braking energy for the wheel (4) via a torsion leaf spring (10) that can be loaded and unloaded by winding and unwinding around an axis (X) common to the wheel (4) and a hollow support shaft (2),
wherein a control shaft (1) being located inside said support shaft (2),
**characterized in that** said support shaft (2) bears:
- a free wheel (100) mechanically connected to the spring (10) via at least one first connecting bar (51),
- a set of gear wheels (70, 71, 72) including an internal gear wheel (70), a central gear wheel (71), and an external gear wheel (72), said internal gear wheel (70) being mechanically connected to the spring (10) via at least one second connecting bar (50),
- stops (90, 91, 92) capable of respectively locking and unlocking the free wheel (100), the central gear wheel (71), and the external gear wheel (72),
and **in that** the control shaft (1) can pivot so as to trigger the stops (90, 91, 92) for the following rotations:
- a rotation of the control shaft (1) by a first angle is able to cause a locking of the central gear wheel (71) for loading the spring (10),
- a rotation of the control shaft (1) by a second angle is able to cause a locking of the free wheel (100) only to maintain the spring (10) without changing the winding state thereof;
- a rotation of the control shaft (1) by a third angle is able to cause a locking of the external gear wheel (72) and an unlocking of the free wheel (100) for unloading the spring (10).

2. The mechanical device according to claim 1, being **characterized in that** the control shaft (1) can pivot with the help of a force onto brake cables (16, 17).

3. The mechanical device according to claim 1 or 2, being **characterized in that** the rotation of a first angle corresponds to a counterclockwise 120° rotation, the rotation by a second angle corresponds to a 0° rotation, and the rotation by a third angle corresponds to a clockwise 120° rotation.

4. The mechanical device according to any one of the claims 1 to 3, being **characterized in that** it comprises epicyclic gear trains (7) cooperating with the gear assembly (70, 71, 72) and is arranged in order to increase the forces transmitted when loading the spring (10) and to reverse a direction of a force transmitted by an expansion of the spring (10) when unloading the spring (10).

5. The mechanical device according to claim 4, being **characterized in that** the epicyclic gear trains (7) are held by extruded plates, so-called cages (13).

6. The mechanical device according to claim 5, being **characterized in that** the cages (13) are integral with the wheel (4) via an axis of rotation of the epicyclic gear trains (7).

7. The mechanical device according to any one of the claims 1 to 6, being **characterized in that** the spring (10) is made of plastic reinforced with carbon fibers.

8. The mechanical device according to any one of the claims 1 to 7, being **characterized in that** the spring (10) has an outer end (11) fixedly or slidably attached to a support (14) and an inner end (12) fixedly attached to said support shaft (2) .

9. The mechanical device according to claim 8, being **characterized in that** said support (14) is a spring locking ring.

10. The mechanical device according to claim 8 or 9, being **characterized in that** the spring (10) comprises a wound portion and inner and outer ends (11, 12), that are more rigid than the wound portion.

11. The mechanical device according to claim 9 or 10, being **characterized in that** the outer end (11) of the spring (10) forms with the spring locking ring (14) such an angle that the outer end (11) rubs against an inner periphery of the spring locking ring (14) in case of continuous braking while the spring (10) is loaded to its maximum.
